# EUROPEAN PATENT APPLICATION

(11) **EP 4 243 174 A2**
(43) Date of publication of application: **13.09.2023**
(21) Application number: 23180757.9
(22) Date of filing: 10.03.2021
(51) Int. Cl.: H01M 50/282

(54) **BATTERY STACK CASING**

(62) Divisional of application: 21275027.7
(71) Applicant: Crompton Technology Group Limited, Oxfordshire, OX16 4XD (GB)
(72) Inventor: Finney, Robert Edwin, Charlbury Oxfordshire OX7 3SB (GB); Liddel, Paul Daniel, Banbury Oxfordshire OX16 4XD (GB); Bernard, James William, Brackley Northamptonshire NN13 5JF (GB); Beale, Thomas, Farringdon Oxfordshire SN7 7UW (GB); Ashwell, James Alexander, Daventry Northamptonshire NN11 9HF (GB); Young, Luke Michael, Brackley Northamptonshire NN13 6EU (GB)
(74) Representative: Dehns

(57) **Abstract**

A method of manufacturing a casing for a battery cell stack, the method comprising: providing a layer of intumescent material around a mandrel; forming an inner casing layer to define inner side walls of the casing; forming an outer casing layer to define outer side walls of the casing; securing the inner casing layer and the outer casing layer together at their ends by means of an insert such as to define an air gap between the inner layer and the outer layer; mounting the combined casing inner and outer layers with the inner layer located on the intumescent layer; removing the mandrel; and securing an end plate to each end of the casing.

## Description

### TECHNICAL FIELD

The present disclosure is concerned with casings for battery cell stacks e.g. lithium-ion battery cell stacks.

### BACKGROUND

Battery cells e.g. Li-ion battery cells are usually assembled in a uniform 'stack' configuration to allow the application of compressive pressure in a spatially and weight efficient manner. The cells are assembled in a stack contained within a casing. The cell stacks require the casing to provide a compressive pre-load to the stack. For maximum cell stack performance, the compressive pre-load should be distributed evenly across the cell surface.

Thermal runaway (TR) can occur if a cell fails e.g. due to overcharging, deep discharge, overheating or some sort of mechanical impact or damage. A cell can rapidly increase in temperature and this can cause all of the cells in the stack to overheat in a thermal runaway effect, resulting in explosion of the cells and release of flammable and toxic fumes. This results in an increase in pressure and temperature inside the casing. To avoid the flammable and toxic fumes being released, the battery casing must be designed to contain the increased pressure. The casing is usually provided with a burst vent, which is designed to open when the internal pressure exceeds a burst level, to allow the fumes to be vented when and where it is safe to do so. Even when the burst vent opens, however, the temperature in the casing can continue to increase and can reach temperatures of e.g. 500 to 800 deg. C in large batteries. The battery case has to be designed to withstand high temperatures due to TR and to continue to seal the cell stack. This is particularly important in safety critical environments such as in aircraft or other vehicles in which a release of high temperatures from a battery can have catastrophic consequences. Whilst metal casings, e.g. stainless steel casings, are robust and can withstand high internal temperatures, such casings are large and heavy. In e.g. aircraft, multiple cell stacks are often required and such metal casings are too heavy. It is important in aircraft and many other applications to minimise the size and weight of components such as battery units.

The use of insulative materials between the cell stack and the casing has been considered, so that lighter, thinner materials can be used as the casing material. The insulating material allows for a temperature gradient between the high cell temperature and the casing, so that it is not necessary for the casing to be made of a material that can withstand the very high temperatures that can occur on thermal runaway. Conventional oven insulation or fire blankets are usually not sufficient as they do not usually have sufficient stiffness to keep the cells in place and prevent them from moving. It is also difficult to use automated manufacturing processes with such insulation.

Another design considers the use of an intumescent material which swells when heated about a predetermined temperature. Such material can be provided between the cells and the casing to take up some of the heat generated by TR before it reaches the casing so that the casing material can be a thinner, lighter material. If, however, such materials are impregnated with resin during manufacture of the casing, they will not provide sufficient insulation from the very high temperatures to allow very light/thin casing materials. With such designs, the intumescent material is incorporated into the internal profile of the casing and the battery unit end cap. To avoid the casing deforming at the end cap seals when the intumescent material swells, and thus to retain the sealing at the end caps, reinforcing fibre hoops are added to the ends of the casing. A high temperature epoxy resin is injected into the casing and end plate structure. These hoop fibres, however, add significant weight and cost to the battery unit.

There is, therefore, a need for a light, low cost battery casing that can be produced by an automated manufacturing process and is rigid and strong and able to withstand the high temperatures that can occur inside the casing due to thermal runaway, whilst also maintaining a compressive load and also maintaining separation between the stack and the casing, e.g. by means of an insulative 'cage', to prevent battery cells contacting the casing.

### SUMMARY

According to one aspect, there is provided a method of manufacturing a casing for a battery cell stack, the method comprising: providing a layer of intumescent material around a mandrel; forming an inner casing layer to define inner side walls of the casing; providing an intumescent material on an inner surface of the inner casing layer; forming an outer casing layer to define outer side walls of the casing; securing the inner casing layer and the outer casing layer together at their ends by means of an insert such as to define an air gap between the inner layer and the outer layer; securing an end plate to each end of the casing; and
mounting the combined casing inner and outer layers with the outer layer located on the intumescent layer.

An insert e.g. of polymer may be fitted between the inner layer and the outer layer at the ends of the casing walls adjacent the end plates to fasten the end plates and to provide sealing of the leak path at the interface between the housing interior and the casing walls. The insert may provide a groove for a seal e.g. an elastomeric or adhesive bead seal. Preferably, the groove is in the form of a female radial groove with a rectangular cross-section.

The end plates may also have a multi-layered structure.

The inner and outer layers preferably comprise carbon fiber reinforced polymer, CFRP.

### BRIEF DESCRIPTION OF THE DRAWINGS

Preferred embodiments of the invention will now be described by way of example only with reference to the drawings.
FIG. 1 is a perspective view of a battery casing according to the disclosure.
Fig. 2 shows a partial sectional view of a casing according to the disclosure.

### DETAILED DESCRIPTION

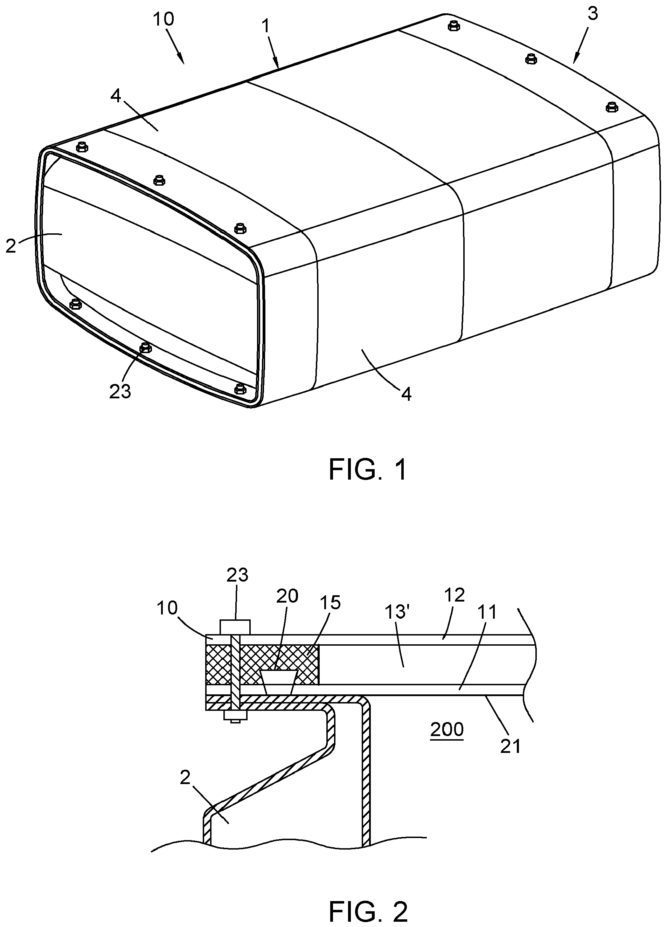

As best seen in Fig. 1, a casing 10 for a battery cell stack (not shown) is formed of casing walls 4 that define a housing 200 to accommodate a stack of battery cells (not shown). The casing 10 is also provided with end plates 2, 3 to sealingly close opposing ends of the casing 10. The end plates 2,3 are designed and assembled to provide a compressive loading to the opposing ends of the stack of cells mounted in the housing.

The stack is arranged in the housing such that it does not contact the side walls 4 of the casing 10. For example, a cage structure or spacer arrangement may be provided between the stack and the casing inner surface.

As can be best seen in Fig. 2 , the casing 10 of this disclosure has a multi-layer structure as will be described below.

Preferably, the end caps 2, 3 also have a multi-layer structure and are sealingly mounted to the ends of the casing and may be fixed e.g. by rivets or nuts and bolts 23.

The casing 10 is formed of an inner layer 11 and an outer layer 12 of casing material. This should be a relatively lightweight, but rigid and strong material e.g. a carbon fibre reinforced polymer (CFRP). The inner and outer layers 11, 12 are arranged to be spaced apart from each other to define a thermally insulating volume 13' therebetween.

The inner layer 11 defines the housing 200 interior for the cell stack (not shown). The outer layer 12 defines the outer surface of the casing 10. At the ends of the casing 10, the space 14 between the inner and outer layers 11, 12 is closed by a plug or insert 15, which is made of a relatively rigid material e.g. a polymer, that can support seals and rivets or nuts and bolts. End caps 2, 3 are provided. These may have a conventional structure or may have the same multi-layer structure as the casing defining the side walls 4, having inner and outer CFRP layers 16, 17 defining, between them, a thermally insulating volume 18. The end caps 2, 3 are secured to the casing between the side walls 4 via seals 19, 20 and may be secured in place by rivets 23.

The inner casing layer 11 is further provided, on the inwardly facing side, with a layer of intumescent material 21.

As, shown in Fig. 2, the thermally insulating volume 13' is filled with air or a vacuum.

In the event of a fault, as described above, causing TR, even when the burst vent (not shown) opens, the temperature inside the housing 200 will increase. In a (nonlimiting) example, the temperature might increase to in excess of 550 to 600 deg. C

The casing material for the inner and outer layers 11, 12 is selected to be light but strong and is e.g. CFRP. This will have a glass transition temperature Tg above which the casing material no longer keeps its shape and structure and so the casing material no longer provides effective sealing and loading. CFRP materials will have a Tg of less than the high temperatures (e.g. 600 deg. C) that can occur in the housing. For example only, the CFRP material might have a Tg of around 260 deg. C. The combination of the thermal insulating volume 13' and the intumescent layer 21 provides a thermal barrier between the interior of the housing 200 and the outer casing layer 12.

The layer of intumescent material 21 acts as a first barrier stage. This material may be e.g. a graphite/mineral wool mix. When the temperature inside the housing reaches a predetermined temperature, the intumescent material will swell and thermally insulate. The temperature at the interface of the intumescent material and the casing, however, will still be higher (e.g. around 360 deg. C) than the glass transition temperature Tg of the casing material. The thermal insulating volume 13', therefore, provides a second barrier stage, further thermally insulating reduce the temperature at the interface at the outer casing layer 12 to be below Tg (e.g. to around 200 deg. C).

The thermal insulating volume itself would not suffice to create the required temperature reduction. In that event, a very deep volume would be required between the inner and outer layers, resulting in a very large casing. The intumescent layer itself may also not suffice since its thermal conductivity is not sufficiently low to limit the transfer of heat into the CFRP layer to an acceptable amount. The combination, however, of the intumescent layer and the thermally insulating volume allows the high temperatures that can build up inside the housing to be reduced to temperatures below Tg of a lightweight casing material such as CFRP.

The end plates 2, 3 are fitted into the ends of the casing 10. As mentioned above, it is feasible, that the end caps 2, 3 have a conventional single layer structure, but better results are obtained where the end caps also have a multi-layer structure such as that described above for the casing.

To ensure a rigid structure at the ends of the casing, between the inner and outer layers 11, 12, to close the thermally insulating volume, and also to add compressive strength for fastening the end plate to the casing, a plug or insert 15 of plastic or polymer material may be provided. This is preferably a high temperature resistance, fire-retardant amorphous polymer with good adhesion properties to epoxy, e.g. PMI, PPSU or PAI. This seals the volume to prevent the escape of air/to retain a vacuum. It is also desirable to have such an insert of a material that provides additional rigidity so as to provide support for the seals to be secured in place and also to allow nuts and bolts 23 or other fasteners to be secured therethrough. The insert may form a groove for a seal such as an elastomer seal or an adhesive bead to ensure that most toxic fumes are exhausted via the burst vent. In one embodiment, the groove has a female radial dovetail configuration with a rectangular cross-section. In an alternative arrangement, sealing may be provided by a tight fit rather than a sealing component.

The mutli-layer structure also allows for continued functionality in the case of BVID (barely visible impact damage) since the space and the inner layer 12 act as a seal if the outer layer is damaged. The impact absorption properties of the air gap provide some protection to the inner skin from damage.

The manufacture of the casing of this disclosure can be automated. The casing may be manufactured as follows:
- A mandrel is provided around which a layer of intumescent material is provided.
- An inner layer 11 of casing material is formed e.g of braided CFRP, and the component is cured.
- An outer layer 12 of casing material is formed e.g of braided CFRP, and the component is cured.
- The inner and outer layers are secured together via a polymer insert such that a space is formed between the layers. The air in the space can be removed to create a vacuum.
- The combined casing inner and outer layers are mounted with the inner side of the inner layer located on the intumescent layer.
- An epoxy resin is then preferably injected over the casing structure to seep into the fiber braids to provide a rigid, robust casing.

The casing structure of this disclosure will provide sufficient thermal insulation to protect the outer casing layer in the event of thermal runaway whilst also providing an impact resistant structure. The integrity of the sealing is maintained without the need for additional fiber hoop reinforcement at the ends of the casing. The casing can be made of a lightweight casing material thus minimising the size and weight of the casing. The manufacture of the casing can be automated.

## Claims

1. A method of manufacturing a casing for a battery cell stack, the method comprising:
providing a layer of intumescent material around a mandrel;
forming an inner casing layer to define inner side walls of the casing;
forming an outer casing layer to define outer side walls of the casing;
securing the inner casing layer and the outer casing layer together at their ends by means of an insert such as to define an air gap between the inner layer and the outer layer;
mounting the combined casing inner and outer layers with the inner layer located on the intumescent layer;
removing the mandrel; and
securing an end plate to each end of the casing.

2. The method of claim 1, further comprising providing a seal around the insert.

3. The method of claim 1 or 2, wherein the insert (15) provides a groove for a seal at the interface between the thermally insulating volume and the inner and outer layers.

4. The method of claim 3, wherein the groove has a female radial dovetail form with a rectangular cross-section.

5. The method of claim 3 or 4, wherein a seal is mounted in the groove.

6. The method of claim 5, wherein the seal is an elastomeric seal.

7. The method of claim 5, wherein the seal is an adhesive bead.

8. The method of any of claims 1 to 7, wherein the insert (15) is a polymer insert.

9. The method of any preceding claim, wherein the first and second end plates (2, 3) have a multi-layer structure comprising:
an inner layer (16) having a first side facing into the housing interior and a second opposite side;
an outer layer (17) spaced outwardly from the second side of the inner layer;
a thermally insulating volume (18)) defined between the second side of the inner layer and the outer layer; and
a layer of intumescent material provided on the first side of the inner layer (16).

10. The method of any preceding claim, wherein the inner and outer layers comprise carbon fiber reinforced polymer, CFRP.
